# EUROPEAN PATENT APPLICATION

(11) **EP 3 279 068 A1**
(43) Date of publication of application: **07.02.2018**
(21) Application number: 16771443.5
(22) Date of filing: 23.03.2016
(51) Int. Cl.: B62K 3/00, B62K 9/00, B62K 13/00

(54) **SCOOTER COMPRISING A STEERED WHEEL**

(30) Priority: 31.03.2015 ES 201500241 U
(71) Applicant: Morales Velázquez, José Joaquin, 30720 San Javier (Murcia) (ES)
(72) Inventor: Morales Velázquez, José Joaquin, 30720 San Javier (Murcia) (ES)
(74) Representative: Carvajal y Urquijo, Isabel
(86) International application number: PCT/ES2016/070208
(87) International publication number: WO 2016/156640

(57) **Abstract**

The invention relates to a scooter comprising a steered wheel and including a deck (1) mounted between a rear wheel (3) and a front wheel (2), said front wheel having a large diameter relative to the rear wheel. The front wheel (2) is mounted on a fork comprising a shaft that extends through a head tube (9), from which another tube (13) projects downwards and connects to the deck (1).

## Description

### Field of the invention

The present invention relates to a scooter comprising a steered wheel, and including a transport deck mounted between a front wheel and a rear wheel and having a handlebar for steering.

### Background of the invention

Scooters having the described structure are already known, wherein the front wheel is related to the steering handlebar through a vertical column.

These scooters may have a plate that protrudes from the back of the deck and runs over the rear wheel as the only means of braking, said lever being able to flex downwards when the user of the scooter steps on it, in order to rest on said rear wheel and act as a mechanical brake, and which does not provide sufficient safety for the scooter.

A general characteristic of traditional scooters is that the front and rear wheels are small, substantially equal, in diameter, which reduces the stability of the scooter.

### Description of the invention

The object of the present invention is a scooter of the indicated type, having effective braking means, which provide an element of safety for the user when handling the scooter.

Another object of the invention is to provide a scooter with a front wheel having a diameter which is similar to that of a traditional pneumatic type bicycle, which provides greater driving comfort and safety as compared to traditional scooters, and allows arranging more effective braking systems that can be installed on the front wheel, on the rear wheel or on both and which can be drum or shoe brakes.

According to the invention, the front wheel of the scooter has a large diameter relative to the rear wheel, with a structure and assembly similar to that of the front wheel of a bicycle.

The front wheel of the scooter will be a pneumatic type wheel and will be equipped with drum or shoe brakes that can be actuated by means of the corresponding levers mounted on the handlebar. Because the front wheel is pneumatic and has a large diameter relative to the rear wheel, it will enable overcoming obstacles with greater safety and will provide more comfortable and safer driving.

This front wheel, similar to that of a bicycle, is mounted on a fork, the shaft of which runs through a head tube from which it protrudes in a small section on the upper part, on which the handlebar, containing the levers of the front wheel brakes, is fastened.

A connecting tube or frame protrudes externally from the head tube, in a radial position and projecting downwards, fastened from the lower end thereof to a base plate, which in turn is attached and fastened to the deck. The connecting tube and the base plate serve as means of connection between the head tube containing the front wheel and the transport deck. The front wheel can also be associated with an electric motor, the battery of which would be housed under the transport deck.

The front wheel can also be associated with an electric motor, the battery of which would be housed under the transport deck or mounted in the connecting tube or frame.

The rear wheel of the scooter can be solid or pneumatic and can be associated with the electric motor.

Like traditional scooters, the transport deck can have a rear lever for braking on the rear wheel by stepping on said lever.

The scooter of the invention may include a folding system that enables reducing the volume thereof in order to facilitate transport and storage.

The rear wheel of the scooter may also be pneumatic and incorporate brakes, for example, disc or shoe brakes that can be actuated from the handlebar.

The transport deck will be large enough to enable positioning an adult thereon in a manner similar to that of a scooter.

### Brief description of the drawings

A non-limiting exemplary embodiment is shown in the accompanying drawings, where:
- Figure 1 shows a side elevation of a scooter formed according to the invention.
- Figure 2 corresponds to detail A of Figure 1 on a larger scale.
- Figure 3 shows the assembly of the front wheel of the scooter in greater detail.
- Figure 4 shows the assembly and connection system of the front wheel with the transport deck.
- Figure 5 shows a plan view of the transport deck.

### Detailed description of an embodiment

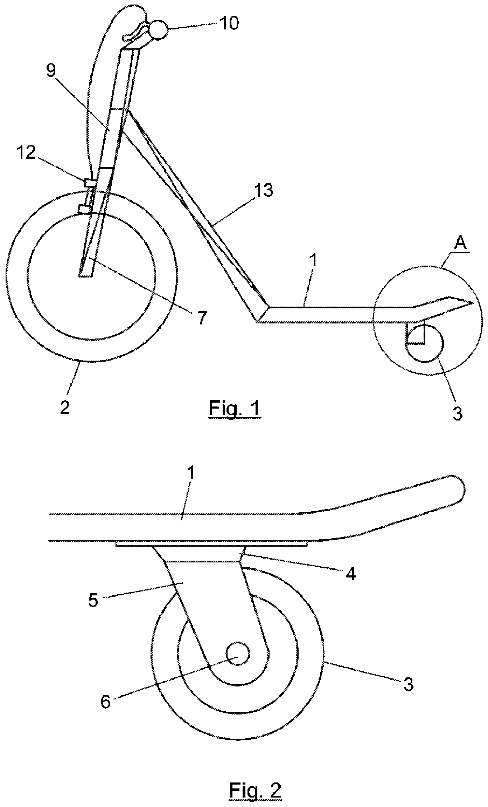

Figure 1 shows a scooter, formed according to the invention, comprising a transport deck (1) mounted between a front wheel (2) and a rear wheel (3), the front wheel (2) having a large diameter relative to the rear wheel (3).

The rear wheel (3) can be mounted on the deck (1) through an articulation (4), in a known manner, which enables driving the scooter by means of a rocking movement of the user located on the deck (1), with a "Zigzag" movement. The wheel (3) can also be mounted directly on the deck through the support (5) and rotation shaft (6), Figure 2.

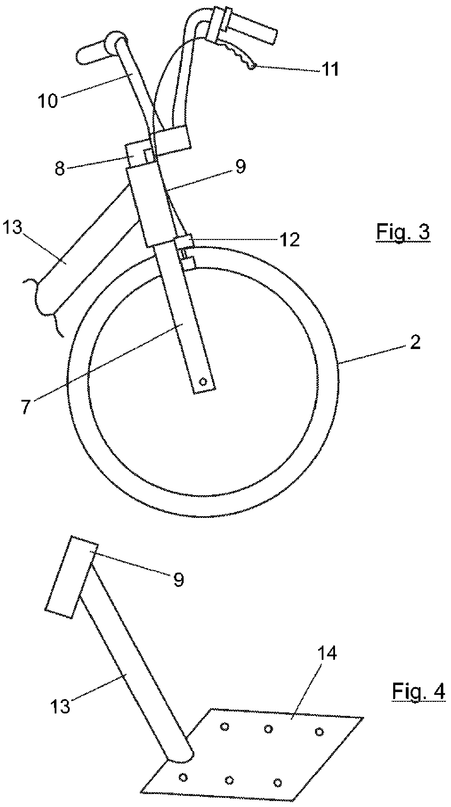

As can be seen in Figure 3, the front wheel (2) is mounted on a fork (7) comprising a shaft (8) that extends through a head tube (9), relative to which it can rotate freely and it protrudes from the upper part thereof in a section to which a handlebar (10) is attached. The levers (11) for actuating the brakes (12) are mounted on this handlebar, brakes which in this case are located on the front wheel.

A connecting tube (13) or frame protrudes externally from the head tube, Figures 1 and 3, in a radial position and projecting downwards, fastened from the lower end thereof to a plate (14 or frame), Figure 4. This plate or frame is attached and fastened to the transport deck (1), for example, by means of screws, rivets, etc.

The assembly shown in Figure 4 made up of a head tube (9) a connecting tube (13) and a plate (14) makes up the means that relate and connect the front wheel (2) to the deck (1).

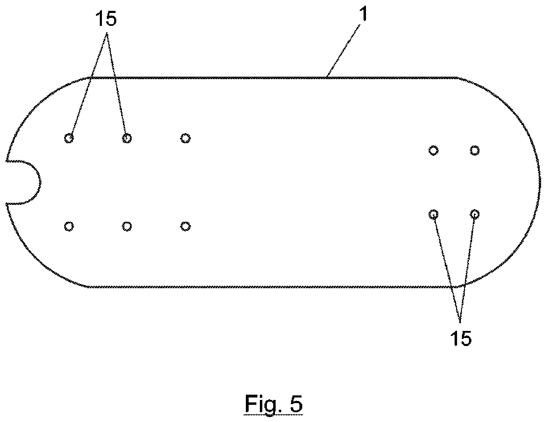

Figure 5 shows a plan view of the deck (1), which can be made of wood, resins with fibers, plastic, etc., and will be large enough to enable supporting the feet of an adult, and it can be provided with holes (15) for passing anchoring screws of the plate (14) and for mounting an actuating motor, not shown, associated with the rear wheel (3).

The connecting tube (13) or frame will be strong enough to support the weight of an adult on the deck (1).

Due to the size of the front wheel (2), similar to that of a normal bicycle, the scooter of the invention provides great driving stability.

## Claims

1. A scooter comprising a steered wheel and including a deck (1) mounted between a front wheel (2) and a rear wheel (3), **characterized in that** the front wheel (2) has a large diameter relative to the rear wheel (3), a size that is similar to that of a normal bicycle, it has brakes (12) and is mounted on a fork (7) comprising a shaft (8) that extends through a head tube (9), from the upper part of which a section protrudes wherein a handlebar (10) is fastened, having levers (11) for actuating the brakes. A connecting tube (13) or frame extends externally from said head tube (9), in a radial position and projecting downwards, fastened from the lower end thereof to a base plate (14), which is attached and fastened to the deck (1).

2. The scooter according to claim 1 **characterized in that** at least the front wheel (2) having a large diameter is a pneumatic type wheel.

3. The scooter according to claim 1, **characterized in that** it includes and electric motor associated with one of the wheels of the scooter, and which is powered by a battery housed under the deck.
